# EUROPEAN PATENT SPECIFICATION

(11) **EP 2 288 256 B1**
(45) Date of publication and mention of the grant of the patent: **17.07.2013**
(21) Application number: 08748813.6
(22) Date of filing: 19.05.2008
(51) Int. Cl.: A01L 7/02, A01L 7/10, A01L 1/00, A01L 1/02

(54) **A SHOCK-ABSORBING HORSESHOE**
STOSSABSORBIERENDES HUFEISEN
FER À CHEVAL AMORTISSEUR

(43) Date of publication of application: 02.03.2011
(73) Proprietor: Q4 Factory ApS, 2930 Klampenborg (DK)
(72) Inventor: MØLLER, Helge, 2920 Charlottenlund (DK); FLARUP, Peter, 2980 Karlebo (DK); MOESGAARD, Anders, 2930 Klampenborg (DK)
(74) Representative: Trier, Mikkel Roed
(86) International application number: PCT/DK2008/050114
(87) International publication number: WO 2009/140964

(56) References cited:
- WO-A-94/22296
- WO-A-96/01044
- WO-A-98/07313
- WO-A-99/65298
- WO-A-2006/134268
- FR-A- 423 160
- FR-A- 2 459 614
- FR-A- 2 901 959
- GB-A- 220 407
- GB-A- 448 070
- GB-A- 191 317 099
- US-A- 5 740 865
- US-B1- 6 244 352

## Description

The present invention relates in a first aspect to a shock-absorbing horseshoe comprising a rigid part for abutment with a hoof of a horse, said rigid part forming one rigid body with two backward facing branches.

Horseshoes implementing a resilient part to shock-absorb the impact between the horseshoe and the substratum are well known in the art. Such prior art shoes comprise a hoof contacting plate, a ground contacting plate and an elastic or resilient layer interposed between the plates. The ground contacting plate and, possibly, the elastic layer are provided with holes large enough for a nail to be inserted through them, the hoof contacting plate being provided with smaller holes to let the nail abut the hoof contacting layer or the interposed elastic layer.

EP 1389422 discloses a shock-absorbing horseshoe of the type defined in the opening paragraph in which a resilient intermediate layer completely fills out the space between an upper part and a lower part, the lower part being shorter than the upper part. Nail holes in the horse-shoe are manufactured by positioning of core elements during moulding of the intermediate layer. Securing of the horseshoe to the hoof by means of conventional nails is accomplished by guiding the nails through the nail holes and into the hoof, the nail heads abutting against the resilient intermediate layer. The two parts of the horseshoe is kept together by a combination of a rigid mechanical connection solely at the front of the horseshoe and an adhering force from the resilient intermediate layer.

The upper and lower parts are cut from a plate of steel. A high steel strength has proven to be necessary in order to ensure structural integrity of the horseshoe. The steel strength needs to be so high that it is virtually impossible to carry out the usually necessary cold-deformation of the horseshoe when shoeing a horse.

Further, the front edge of the horseshoe is subjected to wear due to deflection of the two parts, and this may entail the destruction of the horseshoe by breaking up into parts. This breaking up is even more pronounced when a soft and thus more comfortable intermediate layer material is used, because the more soft a material, the more the rigid mechanical connection at the front of the horseshoe is subjected to stresses. This induces material fatigue in that part of the horseshoe, and the lower part of the horseshoe might break off.

Providing a further means of keeping the two parts together entails a problem. DK 19284 and US 918094 suggest using screws or bolts to improve the structural stability of the three layers. In DK-C-19284 the resilient intermediate layer is positioned as a resilient ring around each bolt between the under part and the upper part. During use of the horseshoe, there is a strong possibility that the heads of the screws, bolts or nails will extend through the hoof of the horse and into softer body parts. This is of course very undesirable.

To avoid this problem, in EP 1389422 a rivet connects an upper and a lower part of a horseshoe, the rivet at its side facing the hoof abutting a cushion made from a resilient material.

However, despite many suggestions in recent years none of the prior art solutions have proven satisfactory regarding the structural integrity of the horseshoe. Use of fastening means such as bolts, rivets or screws only slightly prolong lifetime of the horseshoe. The three-layer construction of the shock-absorbing horseshoes has proved very hard to provide with sufficient stability. During use, such horseshoes still tend to break up into parts and, for this reason, still have not won significant market shares.

US 5,740,865 A discloses a horse-shoe according to the introductory part of claim 1.

In view of this prior art, the object of the present invention is to provide a shock-absorbing horseshoe of the type stated in the introduction, which has improved structural integrity, longer lifetime and does not tend to break up into pieces.

To meet this object the horseshoe is characterized in that the lower surface of each resilient part extends downward toward the rear edges of the upper sections.

The inventors of the present invention have discovered that the structural stability problems of the prior art shock-absorbing horseshoes seem to be due to a fundamental flaw in the three-layer design of the prior art. Multiple prior attempts to solve these problems having not resulted in anywhere near satisfactory results, the inventors have developed an alternative solution dispensing with the three-layer structure of the prior art.

Thus, it has been discovered that the main shock-absorbing effect is achieved by providing resilience at the backward or heel part of the horseshoe. Providing a resilient part at this position, the resilient part abutting the ground during use has proven to provide satisfactory shock absorption or dampening. This is believed to be due to the fact that during running the hoof "heel" hits the ground initially and with the greatest force.

This further allows for the remaining part of the shoe to be formed as one rigid body corresponding in structural integrity to more conventional and widely used horseshoes. Also, the resilient part can be manufactured as a more stable entity and can be readily secured to the rigid part.

Manufacture of the horseshoe of the present invention can be carried out at a competitive price and with a safe securing of the shoe to the hoof without any risk that the individual parts of the shoe will fall apart during use. The solution of the present invention furthermore does not involve any increased risk of damaging the horse.

In a preferred embodiment of the first aspect of the invention said rigid part is a solid, integrally formed body, providing for an improved structural integrity of the horseshoe.

In another embodiment said rigid part in each said upper section above the respective resilient part comprises cut-outs forming barbs adapted for firmly retaining said resilient parts to each said upper section.

The backwardly inclined resilient parts ensure that the impact of the hoof with the ground is on the resilient parts. Further, the resilient parts are provided with greater resilience. In a further development of this embodiment each said lower side of said resilient parts extends downward in an angle of 2-10°, preferably 3-6°, more preferred about 4°, in relation to said underside of the respective lower section. Such dimension of the backwardly inclining resilient parts has proven optimal regarding impact with the ground without disturbing the balance of the horse.

In a further embodiment said resilient parts comprise a moulded resilient plastic material, preferably polyurethane. Resilient plastics and rubbers have good working properties and may by moulding be brought to adhere well to the surfaces of the rigid part. Polyurethane (P) has in particular turned out to be a suitable material as it in tests has proven to be a well performing resilient and durable material in this connection.

In a second aspect, which by itself does not form part of the invention claimed herein, a set of parts adapted to be assembled to form a shock-absorbing horseshoe is provided, comprising a rigid part adapted for abutment with a hoof of a horse and with the ground, said rigid part forming one rigid body with two backward facing branches and having a number of openings extending from a lower to an upper surface of said rigid part, characterized by further comprising a number of resilient nail retainers adapted to be embedded in said openings of said rigid part, each nail retainer comprising at least one nail hole and being arranged to form an intermediate resilient layer between a nail guided through said nail hole and said rigid part.

The embodiments disclosed herein concerning this second aspect do not form part of the invention, but represents background art useful for understanding the present invention.

The inventors of the present invention have discovered that oscillations or shocks from impact of a horseshoe attached to a horse's hoof by means of nails travel or are distributed into the hoof through the nails. Thus, it has surprisingly been found that a significant contribution to the impact and wear on the leg parts of the horse can be avoided by means of resilient nail retainers embedded in the rigid part of the horse-shoe. The resilient nail retainers form a resilient layer between the nails and the rigid part of the horseshoe, providing significant dampening of the effects to the hoof and other leg parts of the horse of the impact of the horseshoe with the substratum.

In a preferred embodiment of the second aspect said nail retainers are arranged such that a nail can be connected to a hoof of a horse through one said nail hole without being in contact with any portion of said rigid part. This provides for an optimal dampening of impact forces exerted on the horseshoe.

In another embodiment said nail retainers comprise a moulded resilient plastic material, preferably polyurethane. As has been described above in relation to the first aspect of the invention polyurethane (P) has in particular turned out to be a suitable material as it in tests has proven to be a well performing resilient and durable material in this connection.

In another embodiment said openings in said rigid part and said nail retainers follow a curvature of said horseshoe.

In another embodiment each nail retainer comprises a section for abutting a head of a nail, said section preferably being sunk in said nail retainer. This ensures that impact oscillations travelling from the rigid part of the horseshoe, through the nail heads and the nails and thus into the hoof are significantly dampened.

In another embodiment said nail retainers are embedded in said openings. In a further development of this embodiment said horseshoe is according to an embodiment of the first aspect of the invention, said resilient parts and nail retainers preferably being manufactured from the same resilient material. This embodiment has the advantage of providing the possibility to form the resilient parts and the nail retainers in the same process while providing optimal shock-dampening effects.

In another embodiment said horseshoe, besides said resilient parts and said nail retainers, does not comprise any resilient elements. This ensures maximum durability of the horseshoe.

The invention will be explained in detail in the following by means of examples of embodiments with reference to the schematic drawing, in which
Fig. 1 is a perspective view of an embodiment of a shock-absorbing horseshoe according to the first aspect of the invention, said horseshoe also forming a set of parts according to the second aspect,
Fig. 2 is a top view of the horseshoe shown in Fig. 1,
Fig. 3 is a bottom view of the horseshoe shown in Fig. 1,
Fig. 4 is a side view of the horseshoe shown in Fig. 1, and
Fig. 5 is a sectional view taken along the line V-V of Fig. 3 of a nail retainer of the horseshoe shown in Fig. 1.

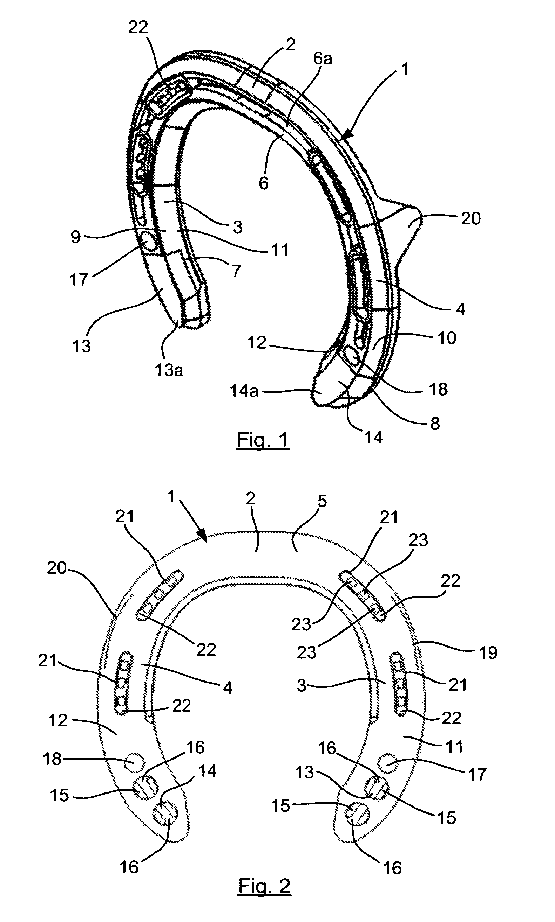

Figs 1-4 are different views of an embodiment of a shock-absorbing horseshoe according to the first aspect of the invention, said horseshoe also forming a set of parts according to the second aspect. In all four views the horseshoe is shown with a front end upward; the front end is in the present context to be understood as facing forward, i.e. towards the head of a horse to which the shoe is to be attached.

A rigid part 1 of the horseshoe is shaped substantially as a conventional horseshoe according to a hoof of a horse (not shown) with a front portion 2 coherent with two backward (i.e. towards a tail of the horse) facing branches 3, 4. When shoed to a horse an upper surface 5 of the rigid part 1 abuts the hoof of the horse, and a lower surface 6 is brought into impact with the ground or substratum on which the horse moves. The rigid part 1 forms a solid, integrally formed main shoe body and may be made from any suitable material having a suitable rigidity and wear resistance, cf. also below. Typically, metal with good wear resistance and good cold working properties like for instance steel is chosen.

Cut-outs 7, 8 of the rigid part 1 are formed at the end of each branch 3, 4 such that lower sections 9, 10, respectively, of each backward facing branch 3, 4 are shorter than upper sections 11, 12, respectively, measured in the backward direction. Respective resilient parts 13, 14 extend backward beyond rear edges of the lower sections 9, 10 and end at rear edges of the upper section 11, 12.

In the present specification the term "rigid" is used as meaning "high stiffness" and is, with regard to the rigid part 1, to be understood such that Young's modulus E of the part is relatively high in relation to the resilient material of the resilient parts 13, 14 (and in relation to the resilient nail retainers 22, cf. below), which have a comparatively low Young's modulus. Generally, the proportion of E of the rigid part 1 in relation to E of the resilient parts 13, 14 is preferably at least 100, more preferably at least 200 and most preferred at least 400. On the other hand, E of the rigid part 1 should not be too high (in absolute terms) because the oscillation frequency of the rigid part increases with E, a high oscillation frequency worsening the effect on the horse of oscillations. Also, a higher value of E makes it harder to cold-deform the horseshoe when shoeing the horse. Preferably, E of the rigid part 1 lies within an interval of 80-250 GPa, more preferably 100-200 GPa and most preferred 150-175 GPa. Preferably, E of the resilient parts 13, 14 (and the nail retainers 22, cf. below) is 10-700 MPa, more preferably 100-400 MPa and most preferred 200-300 MPa. In the present embodiment the resilient parts 13, 14 are moulded from a resilient plastic material, preferably polyurethane, the proportion of E of the rigid part 1 (made from steel) in relation to E of the resilient parts 13, 14 (made from polyurethane) being above 400. The yield strength of the material of the rigid part 1 should be in an interval of about 235-255 N/mm², preferably about 245 N/mm². In the present context the values of Young's modulus E and the yield strength are to be considered when measured under conditions relating to strain, temperature etc. as would occur during ordinary use of the horseshoe (i.e. when shoed on a horse).

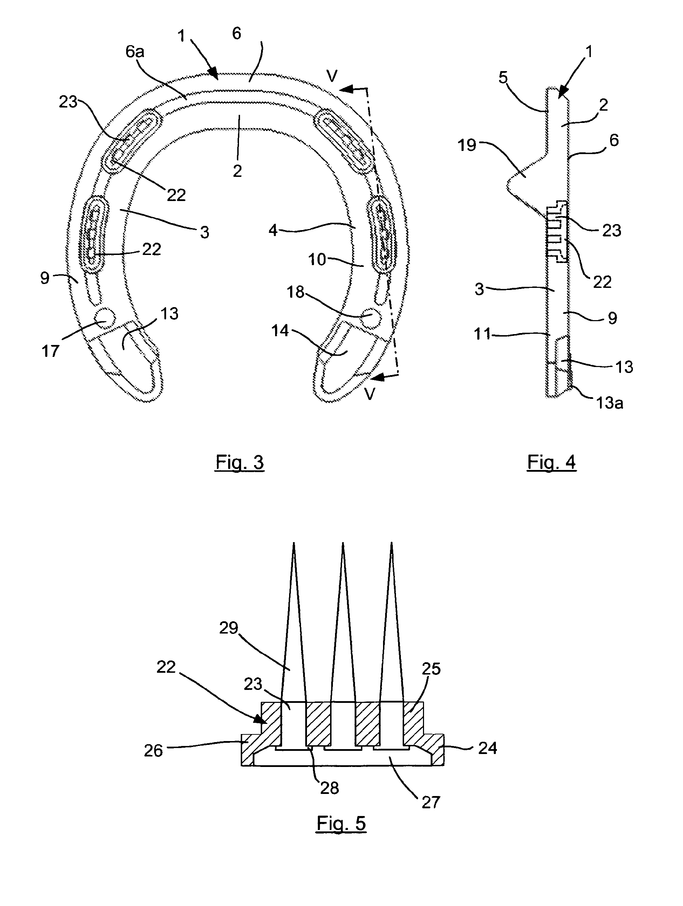

As is best seen in Fig. 4, each resilient part 13, 14 is slightly wedge-shaped. A lower surface 13a, 14a of each resilient part 13, 14 is at the rear edges of the respective lower section 9, 10 in alignment with an underside of the respective lower section 9, 10, the respective lower surface 13a, 14a extending downward and backward toward the rear edges of the respective upper section 11, 12. In the embodiment of the drawings the resilient parts 13, 14 extend downward in an angle of about 4° in relation to the underside of the lower sections 9, 10.

By providing the resilient parts 13, 14 at the rear edges of the backward facing branches 3, 4, a shock-absorbing effect is obtained in the rear part of the horseshoe, which is the part of the horseshoe first hitting the substratum.

The thickness of each resilient part 13, 14 is defined as the distance between a lower surface and an upper surface of the respective resilient part. It has proven advantageous that this thickness.is 1.25-2.5 times larger than the thickness of the parts of the upper sections 11, 12 of the rigid part 1. Preferably, however, this ratio between the thicknesses lies in an interval of 1.5-2.0, most preferred about 1.7. Further, it has proven advantageous that from the rear edge of the horseshoe the resilient part extends 0.15-0.4, preferably about 0.25 of the linear distance from the rear edge to the front edge of the horseshoe. These dimensions provide for an optimum shock-absorbing effect combined with structural integrity of the horseshoe.

In the backward facing branches 3, 4 of the horseshoe respective holes 17, 18 are provided for the possibility of providing a modax (not shown) to enable the horse to stand firmly on a slippery or loose substratum such as ice or snow or in connection with riding in rough terrain.

The rigid part 1 is at a front section of the branches 3, 4 provided with respective conventionally formed, upward extending toe clips 19, 20 serving as abutment for the edges of a hoof.

As is seen best in Fig. 3, in the lower surface 6 of the rigid part 1 a slot 6a extends substantially from one resilient part 13 through the curved shape of the rigid part 1 to the other resilient part 14. As is seen best in Fig. 2, four openings 21 extend through the rigid part 1 from the lower surface 6, more specifically from the bottom of the slot 6a, to the upper surface 5 of the rigid part 1. In the four openings 21 four resilient nail retainers 22 are embedded. The nail retainers 22 are uniformly shaped and each comprises three nail holes 23. The openings 21 and the nail retainers 22 substantially follow the curvature of the rigid part 1.

Referring to the sectional view of Fig. 5 the nail retainers 22 each comprises a lower part 24 and an upper part 25. The lower part 24 is bathtub-shaped, a surrounding wall 26 enclosing an inner space 27. The upper part 25 is substantially shaped like a solid box; the three nail holes 23 extending through it. Hereby, the lower part 24 forms countersinking on which nail heads 28 of conventional nails 29 inserted into a hoof abut. The nail retainer 22 shown in Fig. 5 is shown with a dotted line in Fig. 4.

Similar to the resilient parts 13, 14 described above the nail retainers 22 are manufactured from a moulded resilient plastic material, preferably polyurethane.

Hereby, the nail retainers 22 are arranged such that a nail 29 can be connected to a hoof of a horse through a nail hole 23 without touching any portion of the rigid part 1. Thus, the nail retainers 22 are arranged to form an intermediate resilient layer between the nail 29 and the rigid part 1.

The nail retainers 22 are preferably manufactured from the same resilient material as the resilient parts 13, 14 described above. The considerations regarding Young's modulus E described above in relation to the resilient parts 13, 14 equally hold true for the nail retainers 22.

Manufacture of the horseshoe according to the present embodiment is preferably carried out as follows. First, the rigid part 1 is manufactured, preferably by means of drop-forging, providing holes and cut-outs for the resilient parts 13, 14, nail retainers 22 etc. In a subsequent process the rigid part 1 is positioned in one or more forms, and the nail retainers 22 and the resilient parts 13, 14 are simultaneously moulded from resilient material, e.g. polyurethane, onto the rigid part 1. Drop-forging the rigid part 1 involves rather large tolerances of the horseshoe. For this reason it is advantageous to mould the nail retainers 22 and the resilient parts 13, 14 in a number of smaller forms. Hereby, it is made easier to mould the parts, placing the rigid part 1 sequentially in the smaller forms.

Referring to Fig. 2 the upper sections 11, 12 above the resilient parts 13, 14 comprise cut-outs in the form of through-going holes 15, each having a central wing 16. Each wing 16 is slightly sunk from the upper surface 5 to allow for the resilient material to be distributed around the wing 16 such as to use the wing 16 as a barb in order to firmly retain the respective resilient parts 13, 14 to the respective upper sections 11, 12. Adhering forces between the resilient material and the material of the rigid part 1 also contribute to securing the resilient parts 13, 14 and the nail retainers 22 to the rigid part 1.

While moulding the resilient material the holes 17, 18 are also filled with the resilient material in order to provide further shock absorption in cases in which modax are not used. If modax are used, the resilient material is drilled out before positioning of the modax.

Alternatively, the nail retainers 22 may be manufactured separately from the rigid part 1, e.g. in the form of separate moulded elements, which are positioned into the openings after being cured. In this case, the separately manufactured nail retainers should be shaped to fit firmly into the openings 21. The set of parts according to the second aspect thus also comprises an embodiment in which nail retainers are provided separately from the rigid part.

When attaching the horseshoe of the present embodiment to a hoof of a horse the horseshoe is first properly positioned by means of the toe clips 19, 20. Then a suitable number of horseshoe nails 29 are inserted into the pre-shaped nail holes 23, through the rigid part 1 and into the hoof.

The invention is not limited to the use of four nail retainers. Any other suitable number may be used. Also, any suitable number of nail holes of the nail retainers may be present in other embodiments.

**List of reference numerals:**

| | |
|---|---|
| 1 | Rigid part |
| 2 | Front portion |
| 3, 4 | Backward facing branch |
| 5 | Upper surface |
| 6 | Lower surface |
| 6a | Slot |
| 7, 8 | Cut-outs |
| 9, 10 | Lower section |
| 11, 12 | Upper section |
| 13, 14 | Resilient part |
| 13a, 14a | Lower surface |
| 15 | Through-going hole |
| 16 | Wing |
| 17, 18 | Hole |
| 19, 20 | Toe clip |
| 21 | Opening |
| 22 | Nail retainer |
| 23 | Nail hole |
| 24 | Lower part of nail retainer |
| 25 | Upper part of nail retainer |
| 26 | Surrounding wall |
| 27 | Inner space |
| 28 | Nail head |
| 29 | Nail |

## Claims

1. A shock-absorbing horseshoe comprising
a rigid part (1) with an upper surface adapted for abutment with a hoof of a horse and a lower surface (6) adapted for impacting with the ground or substratum on which the horse moves, said rigid part (1) forming one rigid body shaped substantially as a conventional horseshoe according to a hoof of a horse with two backward, i.e. towards a tail of the horse, facing branches (3, 4),
cut-outs (7, 8) of the rigid part (1) are formed at the end of each branch (3, 4) such that a lower section (9, 10) of each backward facing branch (3, 4) is shorter than an upper section (11, 12) measured in the backward direction,
a resilient part (13, 14) is provided at a rear edge of each backward facing branch (3, 4) such as to extend backward beyond rear edges of each said lower section (9, 10) and end at rear edges of the respective upper section (11, 12),
each said resilient part (13, 14) is wedge-shaped, a lower surface (13a, 14a) of each said resilient part (13, 14) at each said rear edges of said lower sections (9, 10) being in alignment with an underside of said lower sections (9, 10), and extending backward toward said rear edges of said upper sections (11, 12),
such as to provide resilience at the backward or heel part of the horseshoe, the resilient parts initially abutting the ground during use, and to obtain a shock-absorbing effect in the rear part of the horseshoe,
**characterized in that**
said lower surface (13a, 14a) of each said resilient part (13, 14) further extends downward toward said rear edges of said upper sections (11, 12).

2. A horseshoe according to claim 1, wherein said rigid part (1) is a solid, integrally formed body.

3. A horseshoe according to claim 1 or 2, wherein said rigid part (1) in each said upper section (11, 12) above the respective resilient part (13, 14) comprises cut-outs (15) forming barbs (16) adapted for firmly retaining said resilient parts (13, 14) to each said upper section (11, 12).

4. A horseshoe according to any previous claim, wherein each said lower surface (13a, 14a) of said resilient parts (13, 14) extends downward in an angle of 2-10°, preferably 3-6°, more preferred about 4°, in relation to said underside of the respective lower section (9, 10).

5. A horseshoe according to any previous claim, wherein said resilient parts (13, 14) comprise a moulded resilient plastic material, preferably polyurethane.

6. A horseshoe according to any previous claim, wherein the proportion of Young's modulus of the rigid part (1) in relation to Young's modulus of the resilient parts (13, 14) is at least 100, more preferably at least 200 and most preferred at least 400.

7. A horseshoe according to any previous claim, wherein Young's modulus of the rigid part (1) lies within an interval of 80-250 GPa, more preferably 100-200 GPa and most preferred 150-175 GPa.

8. A horseshoe according to any previous claim, wherein Young's modulus of the resilient parts (13, 14) is 10-700 MPa, more preferably 100-400 MPa and most preferred 200-300 MPa.

9. A horseshoe according to any previous claim, wherein the thickness of each resilient part (13, 14) is 1.25-2.5 times larger than the thickness of the respective parts of the upper sections (11, 12) of the rigid part (1).

10. A horseshoe according to any previous claim, wherein from the rear edge of the horseshoe each resilient part (13, 14) extends 0.15-0.4 of the linear distance from the rear edge to the front edge of the horseshoe.

11. Use of a horseshoe according to any previous claim mounted on a horse's hoof, said resilient parts (13, 14) providing resilience at the backward or heel part of the horseshoe, the resilient parts initially abutting the ground during use, and to obtain a shock-absorbing effect in the rear part of the horseshoe.

## Patentansprüche

1. Stoß absorbierendes Hufeisen, das Folgendes aufweist
einen starren Teil (1) mit einer oberen Oberfläche, die dafür angepasst ist, um an einem Huf eines Pferdes anzuliegen, und eine untere Oberfläche (6), die angepasst ist, auf den Boden oder eine Unterlage, auf der sich das Pferd bewegt, zu schlagen, wobei der starre Teil (1) einen starren Körper bildet, der im Wesentlichen wie ein herkömmliches Hufeisen geformt ist, gemäß einem Huf eines Pferdes mit zwei rückwärts, das heißt zu einem Schweif des Pferdes, zeigenden Schenkeln (3, 4),
Ausschnitte (7, 8) des starren Teils (1), die an dem Ende jedes Schenkels (3, 4) ausgebildet sind, so dass der untere Abschnitt (9, 10) jedes rückwärts zeigenden Schenkels (3, 4) kürzer ist als ein oberer Abschnitt (11, 12), der in die Rückwärtsrichtung gemessen ist,
einen federnden Teil (13, 14), der an der Hinterkante jedes rückwärts zeigenden Schenkels (3, 4) vorgesehen ist, um sich rückwärts über die Hinterkanten jedes der unteren Abschnitte (9, 10) zu erstrecken und an Hinterkanten des jeweiligen oberen Abschnitts (11, 12) zu enden,
wobei jeder federnde Teil (13, 14) keilförmig ist, wobei eine untere Oberfläche (13a, 14a) jedes der federnden Teile (13, 14) an jeder Hinterkante der unteren Abschnitte (9, 10) mit einer Unterseite der unteren Abschnitte (9, 10) gefluchtet ist und sich rückwärts zu den Hinterkanten der oberen Abschnitte (11, 12) erstreckt,
so dass an dem rückwärtigen oder Fersenteil des Hufeisens Federkraft bereitgestellt ist, wobei die federnden Teile während des Gebrauchs anfänglich auf dem Boden anschlagen, um eine Stoß absorbierende Wirkung in dem hinteren Teil des Hufeisens zu erzielen,
**dadurch gekennzeichnet, dass**
sich die untere Oberfläche (13a, 14a) jedes der federnden Teile (13, 14) weiter abwärts zu den Hinterkanten der oberen Abschnitte (11, 12) erstreckt.

2. Hufeisen nach Anspruch 1, wobei der starre Teil (1) ein massiver, integral ausgebildeter Körper ist.

3. Hufeisen nach Anspruch 1 oder 2, wobei der starre Teil (1) in jedem oberen Abschnitt (11, 12) oberhalb des jeweiligen federnden Teils (13, 14) Ausschnitte (15) aufweist, die Stacheln (16) bilden, die angepasst sind, die federnden Teile (13, 14) an jedem oberen Abschnitt (11, 12) fest zurückzuhalten.

4. Hufeisen nach einem der vorhergehenden Ansprüche, wobei sich jede untere Oberfläche (13a, 14a) der federnden Teile (13, 14) abwärts in einem Winkel von 2 bis 10°, vorzugsweise 3 bis 6°, noch bevorzugter 4° in Bezug zu der Unterseite des jeweiligen unteren Abschnitts (9, 10) erstreckt.

5. Hufeisen nach einem der vorhergehenden Ansprüche, wobei die federnden Teile (13, 14) ein geformtes federndes Kunststoffmaterial, vorzugsweise Polyurethan, aufweisen.

6. Hufeisen nach einem der vorhergehenden Ansprüche, wobei der Anteil an Elastizitätsmodul des starren Teils (1) in Bezug zu dem Elastizitätsmodul der federnden Teile (13, 14) mindestens 100 beträgt, bevorzugter mindestens 200 und am bevorzugtesten mindestens 400.

7. Hufeisen nach einem der vorhergehenden Ansprüche, wobei das Elastizitätsmodul des starren Teils (1) in einem Bereich von 80 bis 250 GPa, bevorzugter 100 bis 200 GPa und am bevorzugtesten 150 bis 175 GPa liegt.

8. Hufeisen nach einem der vorhergehenden Ansprüche, wobei das Elastizitätsmodul der federnden Teile (13, 14) 10 bis 700 MPa, bevorzugter 100 bis 400 MPa und am bevorzugtesten 200 bis 300 MPa beträgt.

9. Hufeisen nach einem der vorhergehenden Ansprüche, wobei die Stärke jedes federnden Teils (13, 14) 1,25 bis 2,5 Mal größer ist als die Stärke der jeweiligen Teile der oberen Abschnitte (11, 12) des starren Teils (1).

10. Hufeisen nach einem der vorhergehenden Ansprüche, wobei sich von der Hinterkante des Hufeisens jeder federnde Teil (13, 14) 0,15 bis 0,4 der linearen Entfernung von der Hinterkante zu der Vorderkante des Hufeisens erstreckt.

11. Gebrauch eines Hufeisens nach einem der vorhergehenden Ansprüche, das an einem Pferdehuf montiert ist, wobei die federnden Teile (13, 14) Federkraft an dem rückwärtigen oder Fersenteil des Hufeisens bereitstellen, wobei die federnden Teile anfänglich während des Gebrauchs an dem Boden anschlagen, und um in dem hinteren Teil des Hufeisens eine Stoß absorbierende Wirkung zu erzielen.

## Revendications

1. Fer à cheval amortisseur comportant
une partie (1) rigide présentant une surface supérieure conçue pour venir buter contre un sabot de cheval et une surface (6) inférieure conçue pour venir percuter le sol ou le substrat sur lequel le cheval se déplace, ladite partie (1) rigide formant un corps rigide sensiblement en forme de fer à cheval traditionnel selon un sabot de cheval présentant deux ramifications (3, 4) dirigées vers l'arrière, c'est-à-dire vers la queue du cheval,
des découpes (7, 8) de la partie (1) rigide sont formées au niveau de l'extrémité de chaque ramification (3, 4) de telle sorte qu'une section (9, 10) inférieure de chaque ramification (3, 4) dirigée vers l'arrière est plus courte qu'une section (11, 12) supérieure mesurée dans la direction vers l'arrière,
une partie (13, 14) résiliente est fournie au niveau d'un bord arrière de chaque ramification (3, 4) dirigée vers l'arrière de façon à s'étendre vers l'arrière au-delà des bords arrière de chaque dite section (9, 10) inférieure et à se terminer au niveau des bords arrière de la section (11, 12) supérieure respective,
chaque dite partie (13, 14) résiliente est en forme de coin, une surface (13a, 14a) inférieure de chaque dite partie (13, 14) résiliente au niveau de chacun desdits bords arrière desdites sections (9, 10) inférieures étant alignée par rapport à une face de dessous desdites sections (9, 10) inférieures, et s'étendant vers l'arrière vers lesdits bords arrière desdites sections (11, 12) supérieures,
de façon à fournir une résilience au niveau de la partie vers l'arrière ou partie talon du fer à cheval, les parties résilientes venant initialement en butée sur le sol en cours d'utilisation, et de façon à obtenir un effet amortisseur dans la partie arrière du fer à cheval,
**caractérisé en ce que**
ladite surface (13a, 14a) inférieure de chaque dite partie (13, 14) résiliente s'étend en outre vers le bas vers lesdits bords arrière desdites sections (11, 12) supérieures.

2. Fer à cheval selon la revendication 1, dans lequel ladite partie (1) rigide est un corps solide, formé d'un seul tenant.

3. Fer à cheval selon la revendication 1 ou 2, dans lequel ladite partie (1) rigide dans chaque dite section (11, 12) supérieure au-dessus de la partie (13, 14) résiliente respective comporte des découpes (15) qui forment des crans (16) conçus pour retenir solidement lesdites parties (13, 14) résilientes sur chaque dite section (11, 12) supérieure.

4. Fer à cheval selon l'une quelconque des revendications précédentes, dans lequel chaque dite surface (13a, 14a) inférieure desdites parties (13, 14) résilientes s'étend vers le bas en formant un angle de 2 à 10°, de préférence de 3 à 6 degrés, de préférence encore d'environ 4°, avec ladite face de dessous de la section (9, 10) inférieure respective.

5. Fer à cheval selon l'une quelconque des revendications précédentes, dans lequel lesdites parties (13, 14) résilientes comportent une matière plastique moulée résiliente, de préférence du polyuréthane.

6. Fer à cheval selon l'une quelconque des revendications précédentes, dans lequel le rapport module de Young de la partie (1) rigide/module de Young des parties (13, 14) résilientes est d'au moins 100, de préférence encore d'au moins 200 et mieux encore d'au moins 400.

7. F e r à cheval selon l'une quelconque des revendications précédentes, dans lequel le module de Young de la partie (1) rigide se situe à l'intérieur d'un intervalle de 80 à 250 GPa, de préférence encore de 100 à 200 GPa et mieux encore de 150 à 175 GPa.

8. F e r à cheval selon l'une quelconque des revendications précédentes, dans lequel le module de Young des parties (13, 14) résilientes est de 10 à 700 MPa, de préférence encore de 100 à 400 MPa et mieux encore de 200 à 300 MPa.

9. Fer à cheval selon l'une quelconque des revendications précédentes, dans lequel l'épaisseur de chaque partie (13, 14) résiliente est de 1,25 à 2,5 fois plus grande que l'épaisseur des parties respectives des sections (11, 12) supérieures de la partie (1) rigide.

10. Fer à cheval selon l'une quelconque des revendications précédentes, dans lequel depuis le bord arrière du fer à cheval chaque partie (13, 14) résiliente s'étend de 0,15 à 0,4 de la distance linéaire du bord arrière au bord avant du fer à cheval.

11. Utilisation d'un fer à cheval selon l'une quelconque des revendications précédentes monté sur un sabot de cheval, lesdites parties (13, 14) résilientes fournissant une résilience au niveau de la partie vers l'arrière ou partie talon du fer à cheval, les parties résilientes venant initialement buter contre le sol en cours d'utilisation, et pour obtenir un effet amortisseur dans la partie arrière du fer à cheval.
